# EUROPEAN PATENT APPLICATION

(11) **EP 4 406 396 A1**
(43) Date of publication of application: **31.07.2024**
(21) Application number: 23153482.7
(22) Date of filing: 26.01.2023
(51) Int. Cl.: A01C 7/04

(54) **A METHOD AND APPARATUS FOR PLANTING SEEDS**

(71) Applicant: S+DB B.V., 6004 HT Weert (NL)
(72) Inventor: OTTEN, Gerard, 6031 RK Nederweert (NL); RIJSTENBIL, Marco, 6031 RK Nederweert (NL)
(74) Representative: Hutchins, Michael Richard

(57) **Abstract**

The invention provides a method for sowing seeds in a soil substrate, the seeds being carried by a seed tape; which method comprises advancing along the soil substrate a carriage provided with a rotating soil cutting disc (2), a seed tape feeder, and a rotating pressing disc (3) mounted on the carriage in-line behind the soil cutting disc (2); such that:
(i) the rotating soil cutting disc (2) cuts a longitudinally extending substantially vertical slit as the carriage advances along the soil substrate;
(ii) the seed tape is fed in front of the pressing disc (3) by the seed tape feeder and brought into contact with the pressing disc (3) so that a peripheral pressing edge of the pressing disc (3a) is substantially centrally aligned between two edges of the seed tape;
(iii) the pressing disc (3) progressively creates a longitudinal fold in the seed tape and progressively pressed forces the folded seed tape into the slit as the carriage advances, such that after being pressed into the slit, the longitudinal fold in the seed tape is downwardly oriented and the two edges of the seed tape are upwardly oriented, and there is a vertical gap between the two edges and an upper end of the slit as well as an apparatus for carrying out the method.

## Description

The invention relates to a method of planting seeds which comprises embedding a seed tape in the ground and to an apparatus for performing the method.

### BACKGROUND OF THE INVENTION

It is known that by enhancing the precision with which seeds are planted, the germination of the seeds and early growth of both sprout and root are improved thereby making seeds of, for example, grass and vegetables less dependent on the environmental conditions. The use of seed tapes offers many opportunities for enahcing the precision of seed planting and allow seeds to be planted with very high precision. Such seed tapes typically comprise one or more layers or sheets of either paper, woven or nonwoven fabrics, plastic films, mulch mats, or combinations thereof to which seeds are adhered or between which seeds are sandwiched.

Our earlier patent EP 3 403 483 discloses seed tapes formed from self-supporting films of a water-based adhesive such as polyvinyl alcohol.

US patent US 4,173,844 (Knolle et al.) discloses laminar seed carriers comprising two layers having different characteristics bonded together and seeds held between the layers. The seed carriers would appear to be intended to be laid horizontally on the ground.

Other methods of preparing seed tapes or seed carriers are described in EP 0953280 (Coudrieau et al.) and KR100759274.

US 5,165,351 (Billings) discloses an apparatus and method for laying a seed tape. In the Billings method, a furrow is created by a "furrow opener" at the leading end of a seed planter unit and the seed tape is laid horizontally into the furrow and then covered by soil.

In most known systems for seeding using seed tapes, the seed tape is laid flat against the soil or the bottom of a furrow and it is typically necessary to hold the seed tapes down with soil, sand or like materials to prevent them from being blown away. In a departure from this practice, US patent US 2,571,491 describes a seeding method in which the seed tape is laid mainly in a vertical plane. Thus, US 2,571,491 discloses a seed tape formed from two similar strips of porous non-absorbing paper glued together over part of their width to form a sandwich structure with seeds being held in the glue between the strips. In use, a slit trench or furrow is formed in the ground and the seed tape is inserted in a vertical orientation into the slit trench such that a proportion of the tape protrudes above the ground. Soil is pressed against opposite sides of the seed tape to hold it in place and the upper edges (which are not glued together) are then folded back to lie flat against the soil. The purpose of the folded back edges is to provide protected areas on either side of the seed row. One problem with the method disclosed in US 2,571,491 is how to press the soil against the sides of the seed tape to hold it in place. It is easy to imagine how this could be done manually, but less easy to envisage how it could be done quickly and accurately by mechanical means, and US 2,571,491 contains no disclosure of any machinery that could be used for this purpose. A further potential problem with the method disclosed in US 2,571,491 is that the folded back edges could lift in windy conditions, and this could result in the seed strip being pulled out of the furrows. A still further problem is that the folded back edges protruding above the soil are unlikely to be degraded by soil-borne organisms and therefore will persist for longer as residues which may become entangled with growing plants and may inhibit mechanical weeding methods.

At the present time, therefore, there remains a need for improved methods of sowing seeds using seed tape technology.

### THE INVENTION

The present invention provides a method for embedding a seed tape in a soil substrate which involves cutting a continuous substantially vertical slit in the soil and then installing the seed tape in the substantially vertical slit. In order to avoid the need to create a wider furrow to allow installation of the seed strip and then backfill with soil, the method of the invention involves folding the seed tape so that the fold faces downwards, and then pressing the folded seed trip down into the slit using a pressing disc which engages the inner surface of the fold. Once the seed tape has been pressed down into the slit, in contrast to the method described in US 2,571,491, there is no need for further disturbance of the soil.

A major difference between the method of the present invention and the method described in US 2,571,491 is that, in the method of the present invention, the seed tape is installed in the slit such that there is a vertical gap between the top of the slit and the top edges of the seed tape; i.e. the top edges of the seed tape are recessed below ground level This has several advantages:
- Because there are no protruding sections of the seed tape above ground, the seed tape cannot be caught by the wind and pulled out of the slit, and thus the seed tapes are more firmly anchored in the soil.
- There are no protruding sections of seed tape above ground that can act as wicks to draw moisture out of the slit and away from the seeds where the moisture is needed.
- The space in the slit above the seed tape provides room for the stems and leaves of seedlings to grow before they emerge above the surface, thereby providing the growing seedlings with a degree of protection at a vulnerable time in their development.
   - There are no seed tape residues left above the surface of the ground which can become entangled with growing plants and can interfere with mechanical weeding methods. This also avoids the contamination of crops such as fresh vegetables, e.g. spinach, with paper which is not acceptable or allowed under food industry standards.
   - Because the seed tape is wholly below the ground, it will tend to absorb and concentrate moisture from the surrounding soil thereby assisting growth of the plants in drier conditions. By contrast, the seed tape of US 2,571,491 has sections that extend above ground and therefore provide a means for wicking moisture away from the plants.
   - Because the seed tape is wholly below ground, it has greater exposure to soil organisms that can bring about biodegradation of the seed tape once the seeds have germinated. By contrast, the regions of seed tape extending above ground in the method of US 2,571,491 will not be subjected to the same degree of exposure to soil organisms and would be expected therefore to degrade more slowly and therefore persist on the surface of the soil for longer.

In the method of the present invention, a vertical slit is cut into the soil and then the seed tape is pressed into the slit with a pressing disc. The method of the invention allows the seed tape to be pressed into the slit to a selected and controlled depth, the depth being selected according to the nature of the seeds being planted. In contrast to the method described in US 2,571,491, not only does the method of the invention enable the seed tape to be installed in the slit so that it is wholly below ground level, but it is also typically installed so that there is a vertical gap beneath the seed tape as well as above it. The advantage of the vertical gap beneath the seed tape is that there is no vertical resistance to root growth and therefore roots can become established more quickly.

The pressing disc can be controlled so the seed tape is installed in the ground at a desired depth in the slit. In this way, the depth at which the seed is planted in the soil can be controlled and optimized for different seed types.

A general advantage over known seeding methods is that the present method involves far less disturbance to the soil and therefore far less interference with the soil structure and soil life. It is possible to use the method of the present invention on undisturbed surfaces as well as surfaces that have previously been ploughed or furrowed. The method of the present invention uses a cutting disc to cut the slit and the cutting disc is able to cut slits in soils in a wide range of soils and soil conditions. Thus, the method of the invention can reduce the amount of time spent in soil preparation prior to planting.

The method of the invention enables seeds to be planted very accurately in very straight lines which allows subsequent hoeing between seed lines to be carried out more easily and accurately.

A further and substantial advantage over known seeding methods is that the method of the invention provides a greater window of opportunity for carrying out planting. The window of opportunity for planting typically depends on the weather and wetness of the soil. Existing methods of planting are prevented or inhibited if the soil is too wet and clogging of soil preparation and planting machinery with wet soil occurs. Because the method of the present invention requires only minimal disruption to the soil, and because the pressing disc used to press the seed tape into the ground is protected from clogging by the folded seed tape, the method of the present invention can be used in soils having a wider range of moisture contents. The method of the present invention may therefore be used when the soil is too wet for many other planting methods.

The present invention also provides an apparatus for carrying out the method of the invention. The apparatus comprises a carriage upon which are mounted a soil cutting disc for cutting the slit; a seed tape feeder and a pressing disc for pressing the seed tape into the slit. The components of the apparatus are arranged so that the seed tape is fed into the path of the pressing disc such that ribbon wraps around a peripheral pressing edge of the pressing disc thereby creating a longitudinal fold in the ribbon. The pressing disc then presses the folded ribbon down into the slit, the peripheral pressing edge of the pressing disc acting on the inner surface of the fold. The pressing disc may be provided with a shoulder on one or both sides thereof, the shoulder(s) being set back from the peripheral edge. The shoulder(s) press into the soil to create an enlarged region at the upper end of the slit.

Accordingly, in a first aspect (Embodiment 1.0), the invention provides a method for sowing seeds in a soil substrate, the seeds being carried by a seed tape; which method comprises
(i) cutting a longitudinally extending substantially vertical slit along the soil substrate;
(ii) feeding the seed tape in front of a pressing disc and bringing the seed tape into contact with the pressing disc so that a peripheral pressing edge of the pressing disc is substantially centrally aligned between two edges of the seed tape;
(iii) advancing the pressing disc along a path aligned with the slit so that it progressively creates a longitudinal fold in the seed tape and progressively presses the folded seed tape into the slit, whereby, after being pressed into the slit, the longitudinal fold in the seed tape is downwardly oriented and the two edges of the seed tape are upwardly oriented, and there is a vertical gap between the two edges and an upper end of the slit.

The longitudinally extending substantially vertical slit is typically cut into the substrate using a rotating soil cutting disc mounted in front of the pressing disc on a suitable mobile support structure, e.g. a carriage.

In a second aspect, (Embodiment 1.1), the invention provides a method for sowing seeds in a soil substrate, the seeds being carried by a seed tape; which method comprises advancing along the soil substrate a carriage provided with a rotating soil cutting disc, a seed tape feeder, and a rotating pressing disc mounted on the carriage in-line behind the soil cutting disc; such that:
(i) the rotating soil cutting disc cuts a longitudinally extending substantially vertical slit as the carriage advances along the soil substrate;
(ii) the seed tape is fed in front of the pressing disc by the seed tape feeder and brought into contact with the pressing disc so that a peripheral pressing edge of the pressing disc is substantially centrally aligned between two edges of the seed tape;
(iii) the pressing disc progressively creates a longitudinal fold in the seed tape and progressively pressed forces the folded seed tape into the slit as the carriage advances, such that after being pressed into the slit, the longitudinal fold in the seed tape is downwardly oriented and the two edges of the seed tape are upwardly oriented, and there is a vertical gap between the two edges and an upper end of the slit.

Thus, according to the invention, a longitudinally extending substantially vertical slit is cut into the soil substrate by the soil cutting disc and the seed tape is progressively folded and pressed into the slit as the carriage advances along the soil substrate. The fold is a longitudinal fold and results in the seed tape being wrapped around the peripheral pressing edge of the pressing wheel as it is pressed into the slit.

The longitudinal fold is typically made along a line approximating to the centre line of the seed tape; i.e. its longitudinal axis of symmetry.

The slit may extend longitudinally over a distance depending on the length of the field or area of cultivation in which the seeds are to be planted.

The folded seed tape is pressed into the slit in the soil substrate such that the uppermost parts of the seed tape (i.e. the two upwardly oriented edges) are below ground level; i.e. there is a vertical gap between the two upwardly oriented edges and an upper end of the slit.

The slit is preferably formed so that, at an upper end thereof, it has an enlarged region. The enlarged region may be defined by sloping and/or curved walls that diverge towards the top of the slit. The sloping walls, which may be straight or curved, or a combination thereof, provide the slit with an enlarged region, the purpose of which is to provide room for growth of the leaves of seedlings before they emerge above ground level.

In one embodiment, the enlarged region or channel is substantially V-shaped in cross section. In another embodiment, the enlarged region or channel is cup-shaped in cross section.

In addition to providing room for growth of the leaves of seedlings before they emerge above ground level (e.g. above a field surface level), the enlarged regions at the top of the slit, particularly when V-shaped, help to funnel rainwater or other irrigation water into the slits.

The enlarged region or channel is formed by an appropriately shaped shoulder on one or both sides of the pressing disc. The shoulder(s) can be formed integrally with the pressing disc, or the shoulder(s) may be formed separately and secured to the pressing disc. The shoulder(s) may, for example, be formed from a suitably tough plastics material.

There is a radial spacing between the shoulder(s) and the peripheral pressing edge of the pressing disc. The radial spacing is typically at least 1 cm in size and more usually is at least 1.5 cm in size, for example from 1.7 cm to 2 cm. The radial spacing is selected according to the width (before folding) of the seed tape and is typically approximately half the width of the seed tape before folding. Consequently, after the seed tape has been folded, the two lateral edges of the seed tape will lie in close proximity to the radially outermost edge of the shoulder(s).

The depth of the slit (including any enlarged upper end thereof) is larger than the vertical dimension of the seed tape when it has been pressed into the slit. The depth of the slit is selected such that there is always a vertical space beneath the folded seed tape into which the roots of germinating seeds can grow.

Thus, in a preferred embodiment, after the folded seed tape has been pressed into the slit, the folded seed tape is positioned such that the upwardly oriented edges of the folded seed tape are located adjacent a lower end of an enlarged region of the slit (and preferably are located below the lower end of the enlarged region of the slit) and there is a vertical gap between the longitudinal fold in the seed tape and the bottom of the slit.

The positioning of the seed tape in the slit is such that, once seeds have germinated, the roots of the seedling are able to grow downwards into the space below the seed tape and into the surrounding soil and the stem and leaves of the seedling are able to grow into the enlarged region at the upper end of the slit. Thus, the growing seedlings are sheltered from the effects of wind and are better able to thrive.

The depth of the slit and the size (width and vertical depth) of the enlarged region of the slit may be chosen according to the nature and dimensions of the plant. By way of example, the slit may be from 5 to 20 cm deep (for example 5 cm to 10 cm deep) and may have an enlarged upper region of from 1.5 cm to 5 cm deep (for example 2 cm to 3 cm deep) and a width, at its upper end of from 1.5 cm to 3 cm.

The seed tape is fed in front of the pressing disc by the seed tape feeder which typically comprises a roll of the seed tape and one or more guide rollers for guiding the seed tape into place. The positioning of the guide rollers is typically selected such that the seed tape is brought into contact with the pressing disc at a point approximately at the top of the slit. Alternatively, the seed tape can be brought into contact with the pressing disc at a point above the top of the slit so that folding can commence. In a further alternative, the guide roller(s) can be arranged to lay the seed tape on top of the soil substrate over the slit prior to contact with the pressing disc.

The seed tape is an elongate length of seed-containing or seed-bearing strip which is typically formed from a paper and /or plastics-based material and carries seeds. The seeds may be sandwiched between layers of the seed tape or adhered to a surface thereof. Examples of seed tapes are the seed tapes disclosed in our earlier International Patent Application No. PCT/EP/2020/059291 (WO2020/201373), the contents of which are incorporated herein in their entirety.

Thus, for example, the seed tape can comprise a biodegradable polymer film having a plurality of seeds at least partially embedded therein, and a porous reinforcing layer bonded to the biodegradable polymer film. In this embodiment, when the seed tape is folded, the porous reinforcing layer preferably constitutes the inner surface of the folded ribbon so that the seed-containing biodegradable layer faces outwards.

The seed tapes are typically capable of being wound into a roll for storage and dispensing purposes.

The seed tapes have a sufficiently high tensile strength to ensure that they do not break during installation in the soil substrate. Preferably, therefore, the seed tapes should have a wet strength MD (i.e. in the machine direction) of at least 100 N/5 cm.

Prior to folding and installation in the slits, the seed tapes can have a width of from about 3 cm to 8 cm, for example from about 3.5 cm to about 5.5 cm.

The seed tapes can have a thickness (disregarding the size of any seeds adhered to the tapes but including any coatings on a carrier) of from about 0.5 mm to about 5 mm but typically from 0.6-1 mm.

The seed tapes can be prepared under controlled factory conditions so that seeds can be deposited onto or incorporated into the tapes in a highly precise manner thereby allowing for very precise planting patterns when the seed tapes are installed in the ground.

The seed tapes used in the method and apparatus of the invention can contain one or more additives for enhancing the germination or growth of plants from the seeds, or for controlling or eradicating pests. Thus, for example, the seed tapes can contain one or more additives selected from plant growth additives; soil-adjustment additives; extender and/or seed protection additives; bio-stimulants such as humic acid, fulvic acid and plant hormones (e.g. gibberellins and auxins); nitrogen containing compounds; inorganic compounds; salt binding agents such as gypsum (calcium sulphate); micro-nutrients (such as zinc, copper, boron, and seaweed extracts); botanicals; chitosan; biopolymers; biological agents such as fungi (e.g. mycorrhizal fungi) or bacteria (e.g. beneficial soil bacteria); organic or synthetic fertilizers; biocontrol agents such as pesticides, herbicides, fungicides, insecticides, wool fibres (for deterring slugs); pH-modifiers such as calcium carbonate, lime and sulphur; UV-stabilisers; water absorbing and retaining materials such as silica, bentonite clays; talcum; pigments and colour dyes.

Such additives will typically be present in amounts corresponding to 0-50% (w/w), more usually 0-25% (w/w), for example 0-10% (w/w), or 0-5% (w/w) of the biodegradable polymer membrane.

It will be appreciated that the additives will be selected so as to be beneficial (and hence non-toxic) to the growth and development of a plant species of interest from the seeds. Thus, for example, if herbicides are included, they will be selective herbicides that do not harm the plant species of interest.

A range of microbiological additives can be incorporated into the seed tapes to assist germination and plant establishment. These are typically mycorrhizal fungi. Mycorrhizae are a group of about 400 fungi that form symbiotic relationships with plants. They live in or on the roots, extend their hyphae into the soil and make phosphate, nitrogen other nutrients and water available to the host plant. They extend the effective root area many hundreds of times so plants grow faster, larger and stronger with less fertiliser and water. Other commercially available biological and chemical agents that stimulate plant defences and encourage beneficial symbiotic mycorrhizal associations may also be included.

The buffering and other chemical organic agents provide a means of counteracting the impact of adverse chemical contaminants in the soil or medium, as well as improving germination, and/or aiding and accelerating plant establishment. Thus, for example, lime provides a buffer against low pH, gypsum provides a means of counteracting high salinity, whereas clay minerals such as zeolite, kaolinite, calcium bentonite and montmorillonite counteract high levels of fertiliser or chemical contamination in the soil.

The seed tapes used in the method and apparatus of the invention may comprise a dye. The dye acts to reduce the amount of light or change the wavelength of light passing through the film to further suppress growth of weeds. By appropriate selection of dyes or other colouring agents, the biodegradable membrane-forming compositions can cure to form dark-coloured membranes that absorb solar radiation more readily, thereby heating the underlying substrate (e.g. soil) and accelerating germination and crop establishment as well as providing for enhanced weed suppression beneath the membrane.

It will be appreciated that the additives should preferably be biodegradable or should be safely incorporated into the substrate (soil) after the crops have been harvested and that the components do not provide any health concerns, which would render the crops grown from the seeds as unsuitable for human consumption.

It will be appreciated from the above that the method and apparatus of the invention provide a very effective means for the controlled introduction into the soil of a range of substances that are beneficial to the germination of seeds and subsequent growth and development of the resulting plants. The substances can be incorporated into the seed tapes in the required amounts under highly controlled factory conditions and therefore the amounts of such substances delivered to the soil along with the seeds can be controlled in a highly accurate manner.

It will be appreciated from the foregoing that particular embodiments of the method of the invention are as set out in Embodiments 1.2 to 1.19 below.
1.2 A method according to Embodiment 1.0 or Embodiment 1.1 wherein the longitudinal fold is made along a line approximating to the centre line of the seed tape; i.e. its longitudinal axis of symmetry.
1.3 A method according to any one of Embodiments 1.0 to 1.2 wherein the slit is formed so that, at an upper end thereof, it has an enlarged region.
1.4 A method according to Embodiment 1.3 wherein the enlarged region is defined by sloping and/or curved walls that diverge towards the top of the slit.
1.5 A method according to Embodiment 1.3 wherein the enlarged region has a substantially V-shaped cross section
1.6 A method according to Embodiment 1.3 wherein the enlarged region or channel is cup-shaped in cross section.
1.7 A method according to any one of Embodiments 1.3 to 1.6 wherein the enlarged region or channel is formed by an appropriately shaped shoulder on one or both sides of the pressing disc.
1.8 A method according to Embodiment 1.7 wherein there is a radial spacing between the shoulder(s) and a peripheral pressing edge of the pressing disc which is at least 1 cm in size.
1.9 A method according to Embodiment 1.8 wherein the radial spacing is at least 1.5 cm in size, for example from 1.7 cm to 2 cm.
1.10 A method according to any one of Embodiments 1.0 to 1.9 wherein the depth of the slit (including any enlarged upper end thereof) is larger than the vertical dimension of the seed tape when it has been pressed into the slit and is selected such that there is a vertical space beneath the folded seed tape into which the roots of germinating seeds can grow.
1.11 A method according to any one of Embodiments 1.0 to 1.10 wherein the slit is from 5 to 20 cm deep (for example 5 cm to 10 cm deep).
1.12 A method according to Embodiment 1.3 and any Embodiment referring thereto the enlarged upper region is from 1.5 cm to 5 cm deep (for example 2 cm to 3 cm deep) and has a width, at its upper end of from 1.5 cm to 3 cm.
1.13 A method according to any one of Embodiments 1.0 to 1.12 wherein the seed tape is an elongate length of seed-containing or seed-bearing strip which is formed from a paper and /or plastics-based material and carries seeds, and wherein the seeds are sandwiched between layers of the seed tape or are adhered to a surface thereof.
1.14 A method according to Embodiment 1.13 wherein the seed tape comprises a biodegradable polymer film having a plurality of seeds at least partially embedded therein, and a porous reinforcing layer bonded to the biodegradable polymer film.
1.15 A method according to Embodiment 1.14 wherein, when the seed tape is folded, the porous reinforcing layer constitutes the inner surface of the folded ribbon so that the seed-containing biodegradable layer faces outwards.
1.16 A method according to any one of Embodiments 1.0 to 1.15 wherein the seed tape feeder comprises a roll or reel of the seed tape.
1.17 A method according to any one of Embodiments 1.0 to 1.16 wherein the seed tapes have a wet tensile strength (MD) of at least 100 N/5 cm.
1.18 A method according to any one of Embodiments 1.0 to 1.17 wherein, prior to folding and installation in the slits, the seed tapes have a width of from about 3 cm to 8 cm, for example from about 3.5 cm to about 5.5 cm.
1.19 A method according to any one of Embodiments 1.0 to 1.18 wherein the seed tapes have a thickness (disregarding the size of any seeds adhered to the tapes) of from about 0.5 mm to about 5 mm, for example from 0.6-1 mm.
1.20 A method according to any one of Embodiments 1.0 to 1.19 wherein the seed tapes contain one or more additives for enhancing the germination or growth of plants from the seeds, or for controlling or eradicating pests.
1.21 A method according to Embodiment 1.20 wherein the seed tapes contain one or more additives selected from plant growth additives; soil-adjustment additives; extender and/or seed protection additives; bio-stimulants such as humic acid, fulvic acid and plant hormones (e.g. gibberellins and auxins); nitrogen containing compounds; inorganic compounds; salt binding agents such as gypsum (calcium sulphate); micro-nutrients (such as zinc, copper, boron, and seaweed extracts); botanicals; chitosan; biopolymers; biological agents such as fungi (e.g. mycorrhizal fungi) or bacteria (e.g. beneficial soil bacteria); organic or synthetic fertilizers; biocontrol agents such as pesticides, herbicides, fungicides, insecticides, wool fibres (for deterring slugs); pH-modifiers such as calcium carbonate, lime and sulphur; UV-stabilisers; water absorbing and retaining materials such as silica, bentonite clays; talcum; pigments and colour dyes.

In a further aspect (Embodiment 2.1), the invention provides an apparatus for use in sowing seeds in a soil substrate, the seeds being carried by a seed tape; wherein the apparatus comprises a carriage provided with a rotating soil cutting disc, a seed tape feeder, and a rotating pressing disc mounted on the carriage in-line behind the soil cutting disc; such that, in use:
(i) the rotating soil cutting disc cuts a substantially vertical continuous slit as the carriage advances along the soil substrate;
(ii) the seed tape is fed in front of the pressing disc by the seed tape feeder and brought into contact with the pressing disc so that a peripheral pressing edge of the pressing disc is substantially centrally aligned between two edges of the seed tape;
(iii) the pressing disc progressively creates a longitudinal fold in the seed tape and progressively presses the folded seed tape into the slit as the carriage advances, such that after being pressed into the slit, the longitudinal fold in the seed tape is downwardly oriented and the two edges of the seed tape are upwardly oriented, and there is a vertical gap between the two edges and an upper end of the slit.

Particular and preferred features of the apparatus of the invention correspond to the particular and preferred features of the method of the invention as set out above. Thus, particular embodiments of the apparatus of the invention are as follows:
2.2 An apparatus according to Embodiment 2.1 wherein the pressing disc is arranged to create a longitudinal fold along a line approximating to the centre line of the seed tape; i.e. its longitudinal axis of symmetry.
2.3 An apparatus according to Embodiment 2.1 or 2.2 wherein the pressing disc is arranged to press the folded seed tape into the slit in the soil substrate such that the uppermost parts of the seed tape (i.e. the two upwardly oriented edges) are below ground level; i.e. there is a vertical gap between the two upwardly oriented edges and an upper end of the slit.
2.4 An apparatus according to any one of Embodiments 2.1 to 2.3 wherein the pressing disc has a surface profile such that during the pressing of the folded seed tape into the slit, an upper end of the slit is enlarged laterally.
2.5 An apparatus according to Embodiment 2.4 wherein the surface profile of the pressing disc comprises a shoulder on one or both sides of the pressing disc, which shoulder comes into contact with the upper end of the slit during the pressing, thereby to enlarge the upper end of the slit laterally.
2.6 An apparatus according to Embodiment 2.5 wherein each shoulder is sloped or curved.
2.7 An apparatus according to Embodiment 2.6 wherein sloped shoulders are present on both sides of the pressing disc and are configured to create a substantially V-shaped enlarged region at the upper end of the slit.
2.8 An apparatus according to any one of Embodiments 2.5 to 2.7 wherein the shoulders are formed integrally with the pressing disc.
2.9 An apparatus according to any one of Embodiments 2.5 to 2.7 wherein the shoulders are formed integrally and are secured to the pressing disc.
2.10 An apparatus according to Embodiment 2.9 wherein the shoulders are formed from a plastics material.
2.11 An apparatus according to any one of Embodiments 2.5 to 2.10 wherein there is a radial spacing between the shoulder(s) and the peripheral pressing edge of the pressing disc which is at least 1 cm in size.
2.12 An apparatus according to Embodiment 2.11 wherein the radial spacing is at least 1.5 cm in size, for example from 1.7 cm to 2 cm.
2.13 An apparatus according to any one of Embodiments 2.1 to 2.12 wherein an adjustable height mechanism is provided on the carriage for varying the height of the pressing disc above the soil substrate.
2.14 An apparatus according to any one of Embodiments 2.1 to 2.13 wherein the soil cutting disc is arranged to cut a slit of from 5-20 cm deep.
2.15 An apparatus according to Embodiment 2.14 wherein the soil cutting disc is arranged to cut a slit of from 5-10 cm deep.
2.16 An apparatus according to any one of Embodiments 2.1 to 2.15 wherein the seed tape feeder comprises a roll of the seed tape and one or more guide rollers for guiding the seed tape into place.
2.17 An apparatus according to Embodiment 2.16 wherein the one or more guide rollers are positioned such that the seed tape is brought into contact with the pressing disc at a point approximately at the top of the slit.
2.18 An apparatus according to Embodiment 2.16 wherein the one or more guide rollers are positioned such that the seed tape is brought into contact with the pressing disc at a point above the top of the slit.
2.19 An apparatus according to Embodiment 2.16 wherein the one or more guide rollers are arranged to lay the seed tape on top of the soil substrate over the slit prior to contact with the pressing disc.
2.20 An apparatus according to any one of Embodiments 2.1 to 2.19 wherein the seed tape comprises a biodegradable polymer film having a plurality of seeds at least partially embedded therein, and a porous reinforcing layer bonded to the biodegradable polymer film.
2.21 An apparatus according to Embodiment 2.20 wherein the seed tape feeder is arranged to deliver the seed tape such that, when the seed tape is folded, the porous reinforcing layer preferably constitutes the inner surface of the folded seed tape so that the seed-containing biodegradable layer faces outwards.
2.22 An apparatus according to any one of Embodiments 2.1 to 2.21 wherein the seed tape prior to folding has width in the range from about 3 cm to 8 cm, for example from about 3.5 cm to about 5.5 cm.
2.23 An apparatus according to Embodiment 2.22 wherein the seed tape prior to folding has a thickness (disregarding the size of any seeds adhered to the tapes but including any coatings on a carrier) of from about 0.5 mm to about 5 mm, more typically from 0.6-1 mm.
2.24 An apparatus according to any one of Embodiments 2.1 to 2.23 wherein the seed tapes contain one or more additives for enhancing the germination or growth of plants from the seeds, or for controlling or eradicating pests.
2.25 An apparatus according to Embodiment 2.24 wherein the seed tapes contain one or more additives selected from plant growth additives; soil-adjustment additives; extender and/or seed protection additives; bio-stimulants such as humic acid, fulvic acid and plant hormones (e.g. gibberellins and auxins); nitrogen containing compounds; inorganic compounds; salt binding agents such as gypsum (calcium sulphate); micro-nutrients (such as zinc, copper, boron, and seaweed extracts); botanicals; chitosan; biopolymers; biological agents such as fungi (e.g. mycorrhizal fungi) or bacteria (e.g. beneficial soil bacteria); organic or synthetic fertilizers; biocontrol agents such as pesticides, herbicides, fungicides, insecticides, wool fibres (for deterring slugs); pH-modifiers such as calcium carbonate, lime and sulphur; UV-stabilisers; water absorbing and retaining materials such as silica, bentonite clays; talcum; pigments and colour dyes.

Further aspects and embodiments of the invention will be apparent from the specific description below and the accompanying drawings.

### BRIEF DESCRIPTION OF THE DRAWING

Figure 1 is a schematic illustration of the key components of an apparatus according to one embodiment of the invention. The supporting structure on which the key components are mounted has been omitted for visual clarity. Figure 1 contains some exemplary dimensions but these are not intended to be limiting.
Figure 2 is a schematic illustration showing the relative depths of penetration of the soil cutting disc and pressing disc into the soil substrate.
Figure 3 is a photograph showing the soil cutting disc cutting a slit in the soil substrate.
Figure 4 is a photograph showing the pressing disc.
Figure 5 is a schematic view showing the germination of a seedling from a seed tape installed in a slit according to the invention.
Figure 6 is a photograph showing the seed tape installed in the slit, with the top of the ribbon visible.
Figure 7 is a photograph showing seedlings growing from the seed tape.
Figure 8 is a perspective view from one side showing an apparatus according to a second embodiment of the invention. The apparatus of this embodiment can be used to install four seed tapes in parallel but, for clarity, only one of the four seed tape feeders is shown.
Figure 9 is a perspective view from another side of the apparatus of Figure 8.
Figure 10 is a view from above of the apparatus of Figures 8 and 9.

### DETAILED DESCRIPTION OF AN EMBODIMENT OF THE INVENTION

An embodiment of the method and apparatus of the invention will now be described in more detail with reference to the accompanying drawings.

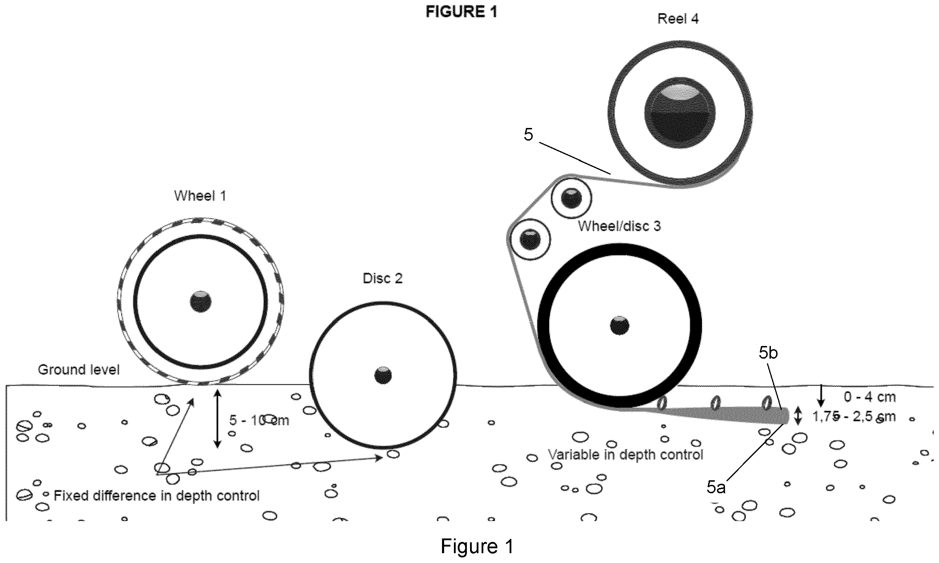

An apparatus according to one embodiment of the invention is shown schematically in Figure 1 and comprises a carriage of a type that can be towed behind a tractor. The carriage comprises a support frame which has been omitted for clarity in Figure 1. One wheel, the jockey wheel (1) of the carriage is shown as resting on the underlying soil substrate, for example a field.

Rotatably mounted on the support frame behind the jockey wheel (1) of the carriage is a soil cutting disc (2) which is typically formed from steel. Mounted on the support frame in line with and behind the soil cutting disc (2) is pressing disc (3). A seed tape feeder comprises a rotating roll (4) of seed tape and a pair of guide rollers, each rotatably mounted on the support frame. As shown Figure 1, the seed tape feeder delivers the seed tape into the path of the pressing disc (3).

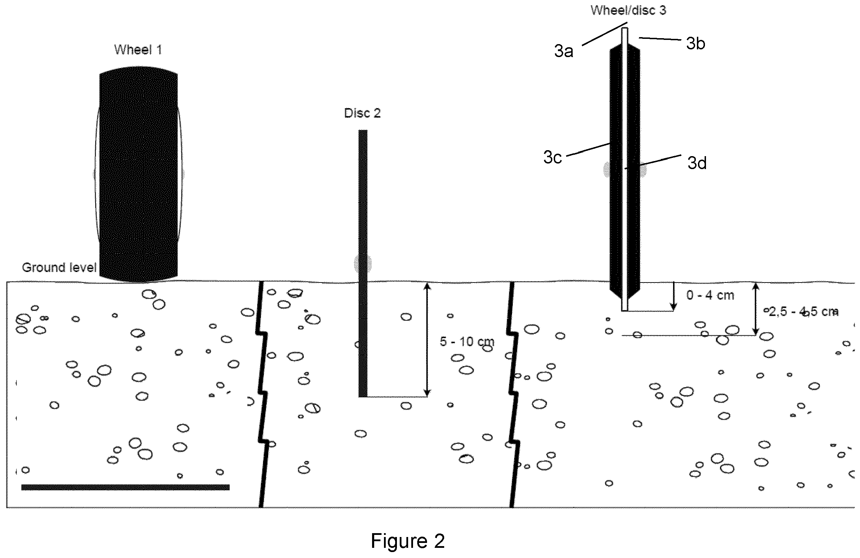

The profiles of the soil cutting disc (2) and pressing disc (3) are shown in Figure 2, alongside a jockey wheel (1) of the carriage. The soil cutting disc (2) has a relatively narrow soil cutting edge for cutting a slit in the underlying soil substrate. By contrast, the pressing disc (3) has a narrow peripheral pressing edge (3a) and an angled annular shoulder (3b) on each side of the disc. The annular shoulders (3b) are formed on plastics discs (3c) which are manufactured separately and are secured to a main body (3d) of the disc which is formed from a metal material such as steel.

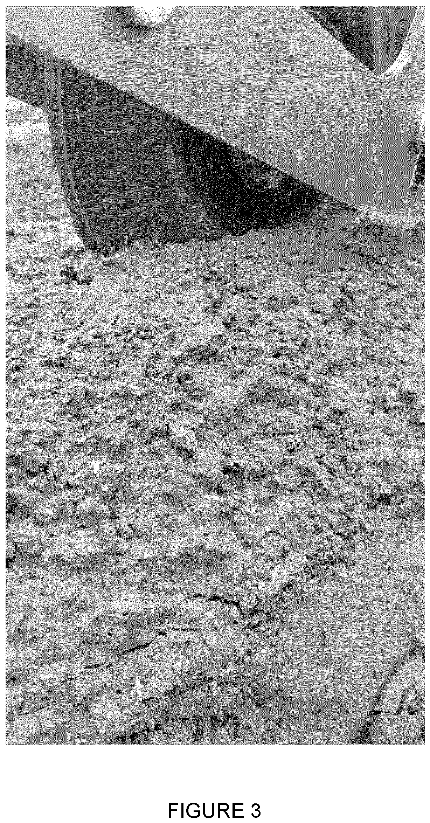

Figure 3 shows the soil cutting disc (2) in close-up together with a part of the support frame on which the cutting disc (2) is attached. In Figure 3, the relatively narrow edge of the disc (2) is clearly visible. The soil cutting disc (2) is typically mounted on the support frame such that there is a fixed distance between the lower surface of the jockey wheel (1) of the carriage and the lower surface of the cutting disc (2). This ensures that the slit cut in the soil substrate is of consistent depth. The depth of the slit may be, for example, from about 5 cm to 15 cm, and more usually from about 5 cm to about 10 cm.

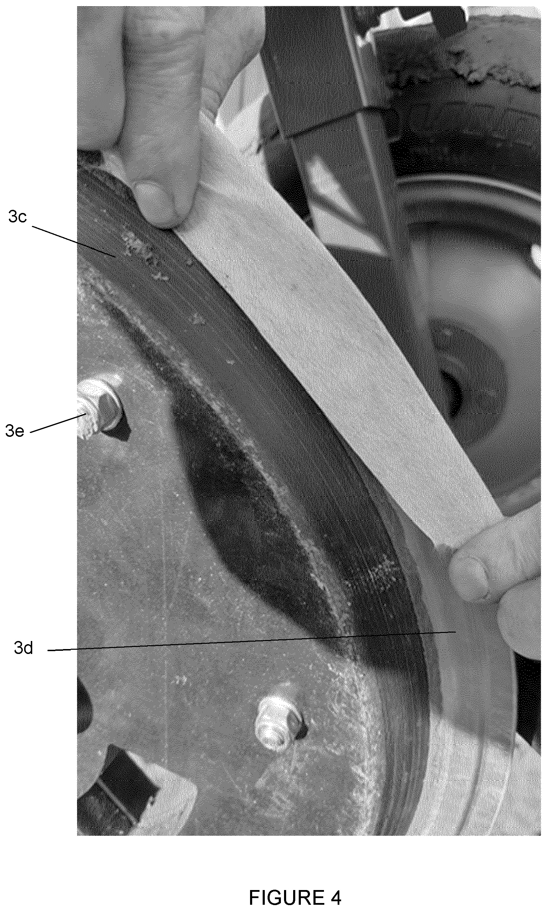

Figure 4 shows the pressing disc (3) in close-up. The plastic discs (3c) are secured to the main body (3d) of the pressing disc by means of nuts and bolts (3e). For illustration purposes to demonstrate typical relative dimensions, Figure 4 shows a length of the seed tape being held manually against the peripheral pressing edge of the pressing disc (3). Also shown in Figure 4 is a part of the support frame on which the pressing disc (3) is mounted. In contrast to the soil cutting disc, which is mounted at a fixed height relative to the carriage jockey wheels (1), the pressing disc (3) is mounted in such a way that the height of the pressing disc (3) can be varied thereby allowing variation of the depth to which the seed tape can be pressed into the slit. This allows seeds to be placed very accurately at a desired depth in the soil which is optimal for the plant species or variety in question.

In use, the carriage is advanced along a field or other soil substrate and soil cutting disc (2) cuts a continuous longitudinally extending slit in the soil substrate. The seed tape (5) is unwound from the reel (4) and rollers and, prior to contact with the pressing disc, is at 90° with respect to the plane of the pressing disc. The seed tape (5) from the reel (4) is delivered into the path of the pressing disc (3) and, as it contacts the peripheral pressing edge of the pressing disc (3), wraps around the edge and is folded in half. The peripheral pressing edge then pushes the folded seed tape (5) down into the slit so that the fold (5a) faces downwards a (6) and the two lateral edges (5b) of the folded seed strip face upwards.

The pressing disc continues to press the folded seed tape (1) into the slit so that the angled shoulders (6a) push against the soil and form an enlarged generally V-shaped region or channel at the top of the slit.

The combination of the relatively blunt peripheral pressing edge of the pressing disc (3) and the tensile strength of the seed tape (5) ensures that the edge does not tear the seed tape (5) as the seed tape is pressed into the slit.

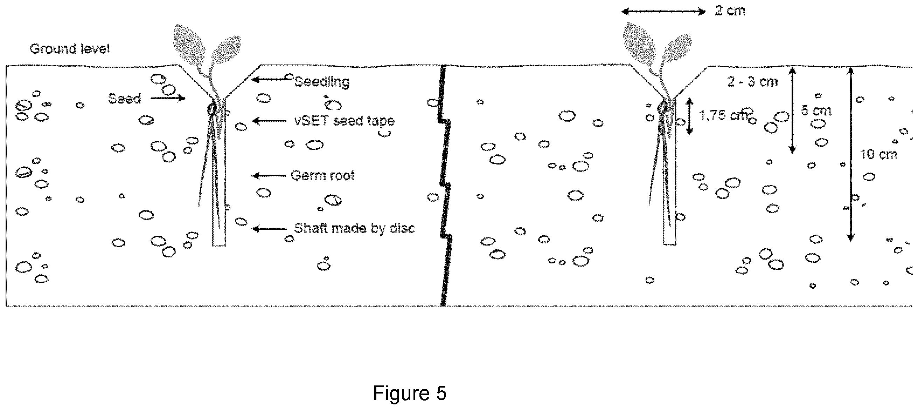

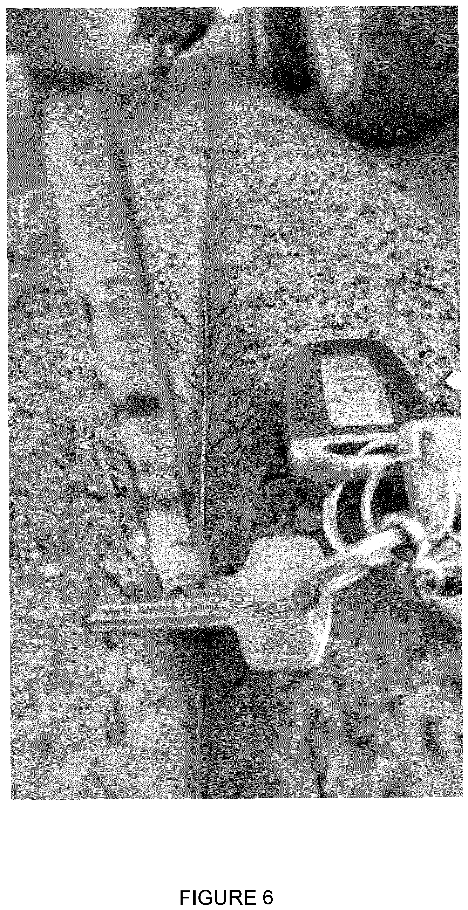

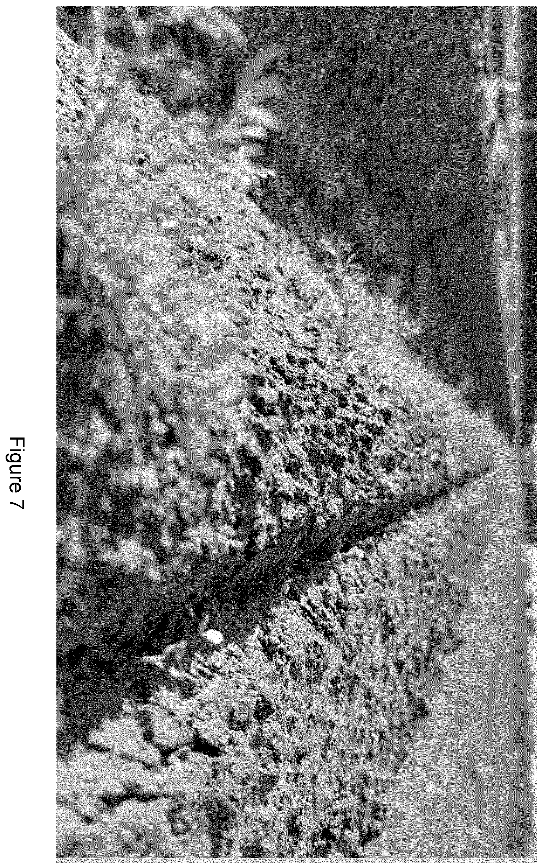

The cross-sectional profile of the slit after the folded seed tape has been pressed into the slit is shown in Figures 5 and 6. In Figure 6, a set of keys and a measuring tape (neither of which form part of the invention) are shown as a way of illustrating scale. Figure 5 also shows seedlings developing from germinated seeds. The gap beneath the folded seed tape provides space into which the roots of the seedling can grow without resistance. The enlarged V-shaped cross section space above the folded ribbon provides room for the stems and leaves of the seedlings to grow before they emerge above ground, as shown in Figure 7. Thus, by positioning the seed tape below the surface of the ground and providing an enlarged upper region of the slit in which the seedlings can grow, the seedlings are provided with protection against environmental conditions such as wind which might otherwise damage the seedlings. The V-shaped profile also serves to funnel water from rain or irrigation sources into the slit thereby making more optimal use of water supplies. The absorbent material from which the seed tape (5) is made means that the seed tape can absorb water, from rainwater, or irrigation or from the surrounding soil and therefore provide a constant supply of moisture to the seedlings.

The angle of the V-shape may be varied according to the type of soil in which the seeds are to be planted. For example, in relatively sandy soils, a wider angle V-shape than shown in the Figures may be used to prevent the walls of the V-shape profile from collapsing.

In the arrangement shown in Figure 5, the germinated seedlings emerge from the outer surface of the folded seed tape rather than growing down through the fold from the inner surface of the folded seed tape. In one embodiment of the invention, the seed tape can be of the type described in International patent application number PCT/EP/2020/059291 (WO2020/201373) and can comprise a biodegradable polymer film having a at least partially embedded therein, and a porous reinforcing layer bonded to the biodegradable polymer film. In this embodiment, when the seed tape is folded, the porous reinforcing layer constitutes the inner surface of the folded ribbon so that the seed-containing biodegradable layer faces outwards. This ensures that the biodegradable polymer film is in direct contact with the soil, allowing water to be more easily circulated from the soil to the seeds with reduced competition for water from the porous reinforcing layer. The porous reinforcing layer will absorb water and, when saturated, will act as a water reservoir for the seedlings as they germinate. By folding the seed tape (5) so that the porous reinforcing layer is on the inside and the biodegradable polymer film containing the seeds is on the outside, the roots of the seedling do not need to grow through the porous reinforcing layer and therefore resistance to root growth is minimised.

In addition to the protection afforded to germinating seeds and developing seedlings by the present invention, a further advantage of the present invention over known methods of seeding using seed strips is that once the slit has been cut and the seed tape installed in the slit, no further disturbance of the soil is necessary. In particular, it is not necessary to cover the seed tape with soil in order to anchor the seed strips in place as is the case with seed strips that are laid flat onto the ground or in a shallow furrow.

Another benefit of the present invention is that the seed tape protects the pressing disc (3) from clogging with mud or soil when soil conditions are wet. Therefore, in contrast to many planting methods, where the risk of machinery clogging with mud means that they tend not to be used when soil conditions are wet, the method and apparatus of the present invention can be used in a wider range of soil conditions and therefore provides a greater window of opportunity for planting.

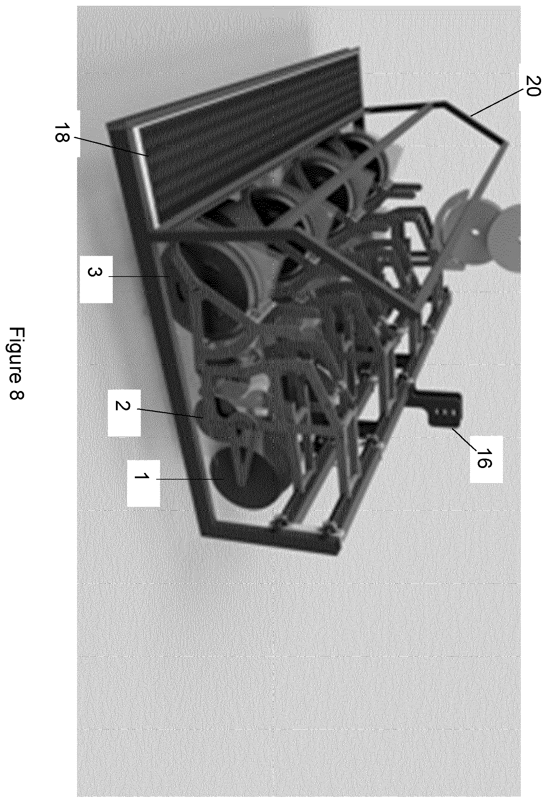

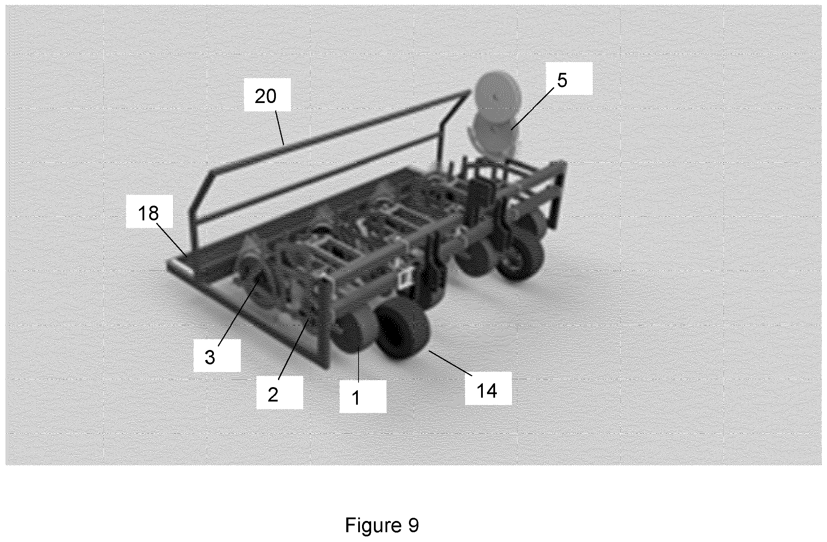

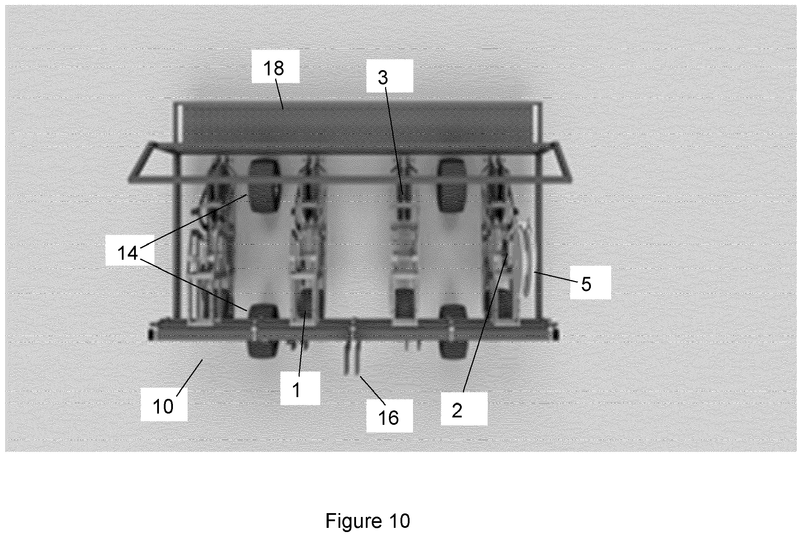

Figures 8 to 10 illustrate an apparatus according to a second embodiment of the invention. The apparatus is similar to the apparatus of Figures 1 to 7 and takes the form of a carriage (10) comprising a support frame (12) mounted on four wheels (14). The frame also has mounted thereon four parallel sets of variable height jockey wheels (1), soil cutting discs (2), pressing discs (3) and seed tape reels (5). Only one of the four seed tape reels is shown in the Figures and the guide rollers have also been omitted. At the front of the carriage (10) is a towing hitch (16) for attaching the carriage to a tractor. At the rear of the carriage is a footplate (18) for upon which an operative (e.g. farm worker) can stand as the carriage is being towed along. A handrail (20) is provided for an operative standing on the footplate (18) to hold on to.

The apparatus of Figures 8 to 10 works in the same way as the apparatus of Figures 1 to 7.

### EQUIVALENTS

The embodiment described above and illustrated in the accompanying drawings is merely illustrative of the invention and is not intended to have any limiting effect. It will readily be apparent that numerous modifications and alterations may be made to the specific embodiment shown without departing from the principles underlying the invention. All such modifications and alterations are intended to be embraced by this application, for example as defined by the claims herein.

For the avoidance of doubt, it is note that any reference numerals in the claims should not be construed as limiting the scope of the invention.

## Claims

1. A method for sowing seeds in a soil substrate, the seeds being carried by a seed tape; which method comprises advancing along the soil substrate a carriage provided with a rotating soil cutting disc, a seed tape feeder, and a rotating pressing disc mounted on the carriage in-line behind the soil cutting disc; such that:
(i) the rotating soil cutting disc cuts a longitudinally extending substantially vertical slit as the carriage advances along the soil substrate;
(ii) the seed tape is fed in front of the pressing disc by the seed tape feeder and brought into contact with the pressing disc so that a peripheral pressing edge of the pressing disc is substantially centrally aligned between two edges of the seed tape;
(iii) the pressing disc progressively creates a longitudinal fold in the seed tape and progressively pressed forces the folded seed tape into the slit as the carriage advances, such that after being pressed into the slit, the longitudinal fold in the seed tape is downwardly oriented and the two edges of the seed tape are upwardly oriented, and there is a vertical gap between the two edges and an upper end of the slit.

2. A method according to claim 1 wherein the longitudinal fold is made along a line approximating to the centre line of the seed tape; i.e. its longitudinal axis of symmetry.

3. A method according to claim 1 or claim 2 wherein the slit is formed so that, at an upper end thereof, it has an enlarged region.

4. A method according to claim 3 wherein the enlarged region has a substantially V-shaped cross section.

5. A method according to any one of claims 1 to 4 wherein the depth of the slit (including any enlarged upper end thereof) is larger than the vertical dimension of the seed tape when it has been pressed into the slit, and is selected such that there is a vertical space beneath the folded seed tape into which the roots of germinating seeds can grow.

6. An apparatus for use in sowing seeds in a soil substrate, the seeds being carried by a seed tape; wherein the apparatus comprises a carriage provided with a rotating soil cutting disc, a seed tape feeder, and a rotating pressing disc mounted on the carriage in-line behind the soil cutting disc; such that, in use:
(i) the rotating soil cutting disc cuts a substantially vertical continuous slit as the carriage advances along the soil substrate;
(ii) the seed tape is fed in front of the pressing disc by the seed tape feeder and brought into contact with the pressing disc so that a peripheral pressing edge of the pressing disc is substantially centrally aligned between two edges of the seed tape;
(iii) the pressing disc progressively creates a longitudinal fold in the seed tape and progressively pressed forces the folded seed tape into the slit as the carriage advances, such that after being pressed into the slit, the longitudinal fold in the seed tape is downwardly oriented and the two edges of the seed tape are upwardly oriented, and there is a vertical gap between the two edges and an upper end of the slit.

7. An apparatus according to claim 6 wherein the pressing disc is arranged to create a longitudinal fold along a line approximating to the centre line of the seed tape; i.e. its longitudinal axis of symmetry.

8. An apparatus according to claim 6 or claim 7 wherein the pressing disc has a surface profile such that during the pressing of the folded seed tape into the slit, an upper end of the slit is enlarged laterally.

9. An apparatus according to claim 8 wherein the surface profile of the pressing disc comprises a shoulder on one or both sides of the pressing disc, which shoulder comes into contact with the upper end of the slit during the pressing, thereby to enlarge the upper end of the slit laterally.

10. An apparatus according to Embodiment 9 wherein sloped shoulders are present on both sides of the pressing disc and are configured to create a substantially V-shaped enlarged region at the upper end of the slit.

11. An apparatus according to any one of claims 6 to 10 wherein the seed tape feeder comprises a roll of the seed tape and one or more guide rollers for guiding the seed tape into place.

12. A method for sowing seeds in a soil substrate, the seeds being carried by a seed tape; which method comprises
(i) cutting a longitudinally extending substantially vertical slit along the soil substrate;
(ii) feeding the seed tape in front of a pressing disc and bringing the seed tape into contact with the pressing disc so that a peripheral pressing edge of the pressing disc is substantially centrally aligned between two edges of the seed tape;
(iii) advancing the pressing disc along a path aligned with the slit so that it progressively creates a longitudinal fold in the seed tape and progressively presses the folded seed tape into the slit, whereby, after being pressed into the slit, the longitudinal fold in the seed tape is downwardly oriented and the two edges of the seed tape are upwardly oriented, and there is a vertical gap between the two edges and an upper end of the slit

13. A method according to claim 12 which is performed using an apparatus as defined in any one of claims 6 to 11.

14. An invention as defined in any one of Embodiments 1.0 to 1.21 and 2.1 to 2.25.
